# EUROPEAN PATENT APPLICATION

(11) **EP 3 670 789 A1**
(43) Date of publication of application: **24.06.2020**
(21) Application number: 18918272.8
(22) Date of filing: 02.11.2018
(51) Int. Cl.: E04H 12/34

(54) **METHOD OF INSTALLING TALL AND SUPER-TALL TOWERS**

(30) Priority: 22.06.2018 UA 201807028
(71) Applicant: Landau, Mykhailo, Kharkiv 61145 (UA)
(72) Inventor: LANDAU, Iurii, Kharkiv 61145 (UA); LANDAU, Mykhailo, 61145 (UA)
(74) Representative: Jeck, Anton
(86) International application number: PCT/UA2018/000119
(87) International publication number: WO 2019/216866

(57) **Abstract**

The invention relates to the field of construction, particularly to the erection of tall towers having mechanical equipment mounted on the tops thereof. The present method of installing towers consists in simultaneously installing a lower part of a tower on a base using a hoisting crane, and installing winches and a platform having a hoisting crane next to the tower, abutting the tower, after which the platform with the crane is lifted to the upper area of the lower part of the tower along guides on the outer surface of the lower part of the tower using the winches, and the subsequent parts of the tower are installed by moving the platform onto the upper part of the assembled part of the tower until the full height is reached, and a wind power unit having blades is installed using the crane on the platform.

## Description

The invention relates to the field of construction, and specifically, to erection of tall and super-tall towers with wind-power units and other technological equipment, as well as other tall structures.

A method for assembling a tall tower from separate units using high-capacity tower cranes is known.

The disadvantage of this method consists is the need to use heavy high-capacity tower cranes, which leads to extended assembly time, increased labor intensity and high cost. In addition, the crane height limits the height of the erected tower with a wind-power unit or other technological equipment.

Another method for erecting a tall tower is known (see RU 2451145, E 04 H 12/08; E 04 H 12/34, 2010), which includes assembling the tower in a horizontal position with the base thereof hingedly supported by the foundation, and rotating it from the horizontal into vertical position while fixing the base of the tower on the foundation, which is achieved by laying a rail track under the tower, placing a trolley equipped with a cable drive on said rail track, and hingedly connecting the tower to the trolley by means of a rod, while the point of hinged joint attachment of the rod to the tall tower is arranged at a distance of at least two rod lengths from the tower base, and the rotation of the tower from the horizontal into vertical position is performed using said rod by moving the trolley along the rail track with a cable and winch assembly toward the base of the tall tower.

The disadvantages of this method include high labor intensity and complexity, since the tower rotation requires a significant amount of preparatory work and numerous mechanisms, as well as heavy lifting. In addition, the heights of the towers that can be lifted are limited.

The objective of the invention is to simplify the operating conditions, improve constructability, and enable erection of tall and super-tall towers with wind-power units and other technological equipment.

The objective is achieved by the fact that according to the proposed invention, the method for installing tall and super-tall towers with wind-power units and other technological equipment, which comprises the erection of the lower part of a tower on a foundation using a crane, followed by the erection of subsequent parts of the tower until the full height thereof is reached, and installation of a wind-power unit, further comprises mounting winches and a crane-equipped platform next to the tower along with assembling the lower part thereof on a foundation using a crane, wherein said winches are placed on the side of the platform adjacent to the tower; next, said crane-equipped platform is lifted to the upper zone of the lower part of the tower along the guides arranged on the outer surface of the lower part of the tower using winches and cables secured to the platform, which connect the latter with the winches via rollers arranged on top of the lower part of the tower; after lifting, the platform is secured in the upper zone of the lower part of the tower; next, a subsequent part of the tower is assembled using the platform-mounted crane, including guides, top-mounted rollers, and cables passing through said rollers and connecting the platform with the winches; next, upon completion of the assembly, the crane-equipped platform is detached from the upper zone of the lower part of the tower, lifted along the guides using winches, and secured in the upper zone of the assembled subsequent part of the tower; next, the process of assembling the parts of the tower is repeated until the full height of the tower is reached, after which a wind-power unit with blades is installed on top of the tower using a crane; and next, the crane-equipped platform is detached from the tower and lowered onto the foundation along the guides using said winches and cables.

In addition, the platform is provided with wheels arranged along the guides on the side adjacent to the tower, by moving which along the guides, lifting and lowering of the platform is performed.

The following system of cause-and-effect relations exists between the combination of characteristic features of the proposed technical solution and achieved technical result.

By assembling winches and a crane-equipped platform along with the lower part of the tower erected on a foundation using a crane, wherein said winches are placed on the side of the platform adjacent to the tower, it becomes possible to lift the crane-equipped platform to the upper zone of the lower part of the tower along the guides arranged on the outer surface of the lower part of the tower using said winches and cables secured to the platform with said cables connecting the platform with said winches via rollers arranged on top of the lower part of the tower. After lifting, the platform is secured in the upper zone of the lower part of the tower and a platform-mounted crane is used to assemble a subsequent part of the tower, including guides, top-mounted rollers, and cables passing through these rollers and connecting the platform to the winches. Upon completion of the assembling process, the crane-equipped platform is detached from the upper zone of the lower part of the tower, lifted along the guides using said winches, and secured in the upper zone of the assembled subsequent part of the tower. The process of assembling the parts of the tower is then repeated until the full height of the tower is reached, after which the platform-mounted crane is used to install a wind-power unit with blades on top of the tower, followed by detaching the crane-equipped platform from the tower and lowering it along the guides onto the foundation using said winches and cables. This platform can be used again later to assemble other towers, which generally simplifies the operating conditions of erecting tall towers, improves constructability, and enables erection of tall and super-tall towers with wind-power units and other technological equipment with tower heights reaching and exceeding 200-300 m.

In addition, the platform is provided with wheels arranged along the guides on a side adjacent to the tower, which improves the conditions for moving the platform up or down along the guides.

Upon researching this and related fields of the invention, no distinctive features of the proposed technical solution were found in other similar solutions. Therefore, the authors believe that the proposed solution meets the criteria of "novelty", "inventive step" and "industrial applicability."

The proposed technical solution is explained by the drawings, where:

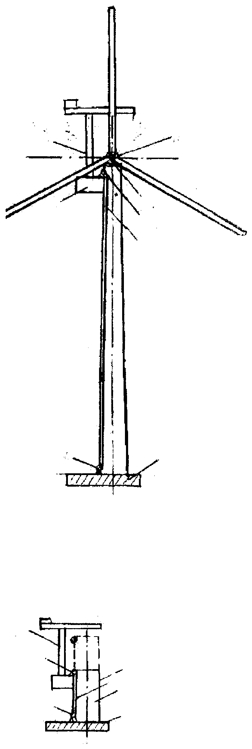

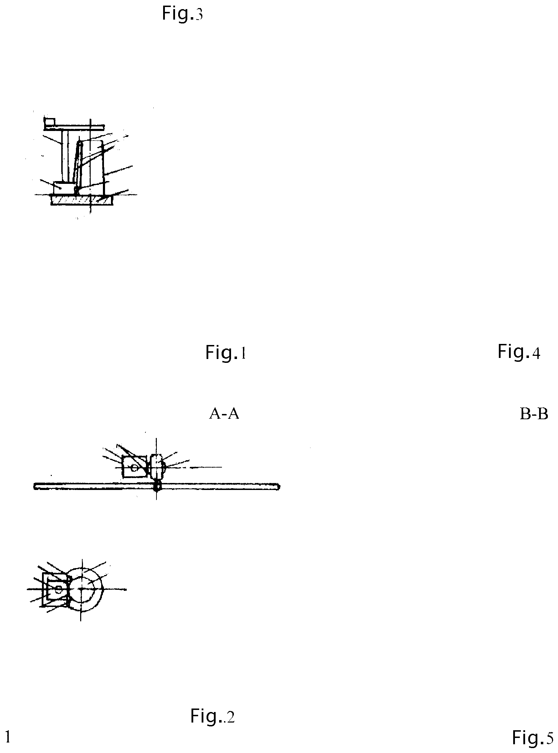

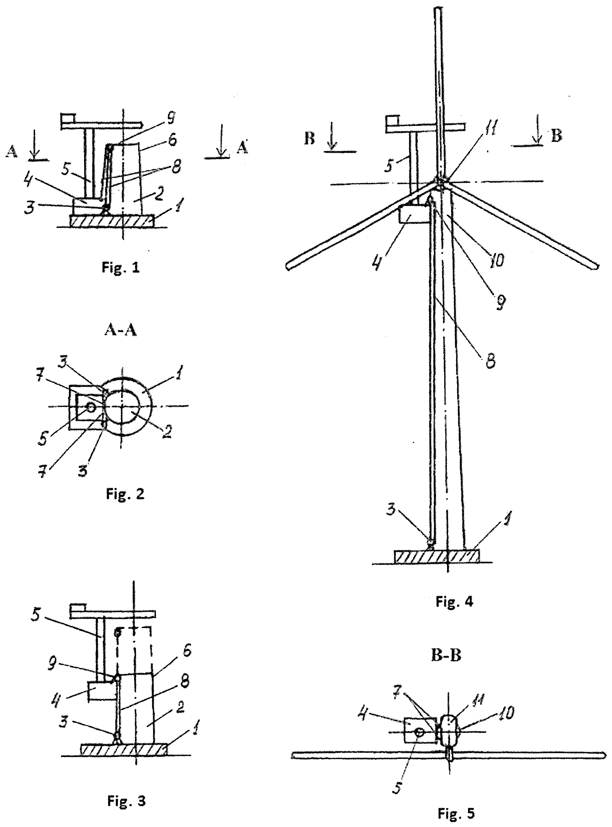

*Figure 1* shows the assembled lower part of the tower and the crane-equipped platform;
*Figure 2* shows cross-section A-A;
*Figure 3* shows the lower part of the tower after lifting the platform with a crane and securing it in the upper zone of the lower part of the tower for further assembling a subsequent part of the tower shown by a dotted line;
*Figure 4* shows the full-height tower with crane-equipped platform upon completion of the installation of a wind-power unit with blades;
   and
*Figure 5* shows cross-section B-B.

The method for installing tall and super-tall towers is realized as follows.

On foundation (1), a lower part (2) of the tower is erected using a crane along with winches (3) and platform (4) equipped with crane (5) installed thereon, which are located next to the tower. Winches (3) are placed on the side of platform (4) adjacent to the tower. Next, platform (4) equipped with crane (5) is lifted to the upper zone (6) of the lower part (2) of the tower along guides (7) arranged on the outer surface of the lower part (2) of the tower using winches (3) and cables (8) mounted on platform (4), which connect platform (4) with winches (3) via rollers (9) arranged on top of the lower part (2) of the tower. Upon lifting, platform (4) is secured in the upper zone (6) of the lower part (2) of the tower. Next, crane (5) installed on platform (4) is used to assemble the next part of the tower including guides (7) and rollers (9) at the top, with cables (8) passing through these rollers (9) and connecting platform (4) with winches (3). Upon completion of the assembling process, platform (4) is detached from the upper zone (6) of the lower part (2) of the tower, followed by lifting platform (4) with crane (5) along guides (7) using winches (3) and securing it in the upper zone of the assembled next part of the tower. Then the process of assembling the parts of the tower is repeated until the full tower height is reached, followed by using crane (5) on platform (4) to install wind-power unit (11) with blades on top (10) of the tower. Next, platform (4) with crane (5) is detached from the tower and lowered onto foundation (1) along the guides (7) using winches (3) and cables (8). Next, platform (4) with crane (5) and winches (3) are dismantled to be used in the process of assembling other towers.

If necessary, rollers (9) can be replaced with bearings.

To improve the conditions of moving platform (4) along guides (7), platform (4) is provided with wheels arranged along guides (7) on the side adjacent to the tower, by moving which along guides (7) lifting or lowering of platform (4) is performed.

The method for installing tall and super-tall towers with wind-power units and other technological equipment can be used for installing thereof on land and on water.

The proposed technical solution makes it possible to simplify the conditions of erecting tall towers, improve constructability, and enable the installation of tall and super-tall towers with wind-power units and other technological equipment.

## Claims

1. A method for installing tall and super-tall towers with wind-power units and other technological equipment, which comprises assembling the lower part of the tower on a foundation using a crane, followed by assembling subsequent parts of the tower until the full height thereof is reached, and then installing a wind-power unit with blades, **characterized in that** along with assembling the lower part of the tower on a foundation using a crane, winches and a crane-equipped platform are mounted next to the tower, wherein said winches are placed on the side of the platform adjacent to the tower; next, said crane-equipped platform is lifted to the upper zone of the lower part of the tower along the guides arranged on the outer surface of the lower part of the tower using winches and cables secured to the platform with said cables connecting the platform with said winches via rollers arranged on top of the lower part of the tower; after lifting, the platform is secured in the upper zone of the lower part of the tower; next, the subsequent part of the tower is assembled using a platform-mounted crane, including guides, top-mounted rollers, and cables passing through said rollers and connecting the platform with the winches; next, upon completion of the assembly, the crane-equipped platform is detached from the upper zone of the lower part of the tower, lifted along the guides using winches, and secured in the upper zone of the assembled subsequent part of the tower; next, the process of assembling the parts of the tower is repeated until the full height of the tower is reached, after which a wind-power unit with blades is installed on top of the tower using the platform-mounted crane; and next, the crane-equipped platform is detached from the tower and lowered onto the foundation along the guides using said winches and cables.

2. The method for installing tall and super-tall towers according to claim 1, **characterized in that** the platform is provided with wheels arranged along the guides on the side of the platform adjacent to the tower, by moving which along the guides, lifting or lowering of the platform is performed.
